# EUROPÄISCHE PATENTSCHRIFT

(11) **EP 2 134 506 B1**
(45) Veröffentlichungstag und Bekanntmachung des Hinweises auf die Patenterteilung: **29.04.2020**
(21) Anmeldenummer: 08748851.6
(22) Anmeldetag: 31.03.2008
(51) Int. Cl.: B23P 15/00, B23C 3/30, B24B 19/00, E02D 5/02, E02D 5/04, E02D 5/08, B21B 1/082

(54) **VERFAHREN ZUR HERSTELLUNG VON SPUNDWANDKOMPONENTEN**
METHOD FOR THE PRODUCTION OF SHEET PILING COMPONENTS
PROCÉDÉ DE PRODUCTION DE COMPOSANTS DE RIDEAU DE PALPLANCHES

(30) Priorität: 30.03.2007 DE 102007015455
(43) Veröffentlichungstag der Anmeldung: 23.12.2009
(73) Patentinhaber: SteelWall ISH GmbH, 82166 Gräfelfing (DE)
(72) Erfinder: HEINDL, Richard, 80639 München (DE)
(86) Internationale Anmeldenummer: PCT/EP2008/002531
(87) Internationale Veröffentlichungsnummer: WO 2008/119529

(56) Entgegenhaltungen:
- WO-A-2005/038148
- WO-A-2007/082619
- JP-A- 2001 146 738

## Beschreibung

Die Erfindung betrifft ein Verfahren gemäß dem Oberbegriff des Anspruchs 1 zur Herstellung einer Spundwandkomponente, die mindestens ein sich über die gesamte Länge der Spundwandkomponente erstreckendes Schloss gleichbleibenden Querschnitts zum Einhängen des Schlosses einer weiteren Spundwandkomponente aufweist. Ein solches Verfahren ist aus der JP 2001 146738 A bekannt.

Spundwände werden aus verschiedenen Spundwandkomponenten, beispielsweise Spundbohlen, zusammengesetzt, die in den Boden gerammt werden. Um einen sicheren Halt zwischen den Spundwandkomponenten zu gewährleisten, sind diese an ihren üblicherweise vertikal verlaufenden Längskanten mit sogenannten Schlössern versehen. Als Schlösser werden in diesem Zusammenhang profilierte Abschnitte verstanden, die einstückig mit der Spundwandkomponente ausgebildet sind. Die Schlösser erstrecken sich über die gesamte Länge der Spundwandkomponente und haben eine gleichbleibende Querschnittsform. Die bekanntesten Schlossformen sind in der DIN EN 10248-2 genannt. Hierzu zählen beispielsweise Larssen-Schlösser, Hoesch-Schlösser, die sogenannten Ball-and-Socket-Schlösser oder aus einem Daumen und Finger gebildete Flachprofilschlösser, um nur einige der bekanntesten Schlossarten zu nennen.

Die bekanntesten Spundwandkomponenten, die mit derartigen Schlössern versehen sind, sind die sogenannten Spundbohlen, aus denen Spundwände in der beschriebenen Weise zusammengesetzt werden. Zum Errichten sogenannter Kombi-Spundwände werden neben den genannten Spundbohlen zusätzlich Träger, beispielsweise Doppel-T-Träger, verwendet, die beabstandet nebeneinander in den Boden gerammt werden und zwischen die jeweils mindestens eine Spundbohle in den Boden getrieben ist. Um die Spundbohlen mit den Trägern zu koppeln, werden zusätzlich sogenannte Verbindungsprofile eingesetzt. Die Verbindungsprofile sind mit entsprechenden Schlössern zum

Einhängen der Spundbohlen und mit Anschlussprofilen versehen, durch die die Verbindungsprofile an den Trägern befestigt werden.

Spundbohlen, Träger und auch die genannten Verbindungsprofile werden üblicherweise durch Warmwalzen, durch Kaltwalzen oder bei komplexeren Schlossformen durch Strangpressen gefertigt.

Nachteilig hierbei ist, dass das Umrüsten der Walzstrassen oder der Strangpresseinrichtung mit hohem zeitlichen und technischen Aufwand verbunden ist, wenn eine andere Schlossform gefertigt werden soll. Ferner besteht keinerlei Möglichkeit, beispielsweise an einer Baustelle, Schlösser nachzuarbeiten oder an herkömmlichen Stahlkomponenten, wie Doppel-T-Trägern, ohne Schweißarbeiten nachträglich Schlösser vorzusehen.

Aus der nachveröffentlichten WO 2007/082619 A ist ein Verfahren zum Herstellen eines Keulenträgers bekannt, bei dem in den sich keilförmig erweiternden Endabschnitt des T-Balkens eine Nut als Bestandteil eines Schlosses zum Einhängen der Schlösser anderer Spundwandkomponenten eingefräst wird.

Die JP 2001 146738 A offenbart ein Verfahren zum Herstellen eines Flachprofils, bei dem nach dem Umformen des Schlosses an dessen Innenseite durch spanende Bearbeitung Unebenheiten entfernt werden.

Bis zum gegenwärtigen Zeitpunkt werden aufgrund der hohen Produktionsstückzahlen Spundwandkomponenten aus Stahl, wie Spundbohle, Verbindungsprofile und Träger, durch Umformen hergestellt, wobei gleichzeitig in einem Durchlauf auch die verschiedenen Schlosskonfigurationen an den Spundwandkomponenten ausgebildet werden. Da Stahl vergleichsweise schwer umzuformen ist und selbst beim Warmumformen nur eine beschränkte Verformbarkeit besitzt, ist durch das Umformen lediglich eine beschränkte Anzahl an vergleichsweise einfachen Schlossformen herstellbar. Das Strangpressen ermöglicht zwar die Herstellung komplexerer Querschnittsformen, hat jedoch den Nachteil, dass die für das Strangpressen erforderlichen Kokillen in der Herstellung sehr aufwendig und im Einsatz vergleichsweise teuer sind.

Ausgehend von diesem Stand der Technik ist es Aufgabe der Erfindung, ein verbessertes Verfahren zur Herstellung einer Spundwandkomponente anzugeben, durch dessen Einsatz bzw. bei der die Schlösser insbesondere mit hoher Flexibilität gefertigt werden können.

Diese Aufgabe wird durch ein Verfahren mit den Verfahrensschritten gemäß Anspruch 1 gelöst.

Durch Einsatz des erfindungsgemäßen Verfahrens werden die Vorteile zweier Fertigungsverfahren kombiniert, nämlich der Umformtechnik, also dem Warmwalzen, dem Kaltwalzen oder dem Strangpressen, und der spanenden Bearbeitung, also Verfahren wie dem Fräsen oder dem Schleifen.

Durch diese erfindungsgemäße Kombination aus Umformtechniken und spanender Bearbeitung werden die einfache und kostengünstige Herstellbarkeit von Spundwandkomponenten aus Stahl durch Umformverfahren, wie Warm- oder Kaltwalzen, mit der hohen Flexibilität der spanenden Bearbeitung kombiniert, wodurch insbesondere die Fertigung kleinerer Stückzahlen oder besonders komplexer oder präzise zu fertigender Schlossformen auf einfache Weise möglich wird. Erfindungsgemäß muss dabei nur sichergestellt sein, dass der Abschnitt, in dem das Schloss durch die spanende Bearbeitung ausgeformt werden soll, nach dem Umformen so ausreichend dimensioniert ist, dass das Schloss ordnungsgemäß ausgebildet werden kann. So weisen insbesondere durch das Umformen hergestellte Spundwandkomponenten über deren Länge betrachtet hohe Maßabweichungen auf, die im Bereich mehrerer Millimeter, gegebenenfalls sogar Zentimeter liegen können. Durch das Vorsehen entsprechend Materials in den Abschnitten, in denen Schlösser ausgebildet werden sollen, spielen die beim Umformen entstehenden Maßabweichungen bei der spanenden Bearbeitung keine wesentliche Rolle mehr. Darüber hinaus zeichnen sich die durch das spanende Bearbeiten gefertigten Schlösser durch eine hohe Genauigkeit aus.

Diesbezüglich ist auch darauf hinzuweisen, dass die Schlösser nicht vollständig durch spanende Bearbeitung hergestellt sein müssen. So liegt es auch im Rahmen der Erfindung, wenn, über den Querschnitt des Schlosses quer zu dessen Längsrichtung betrachtet nur ein oder mehrere Abschnitte des Schlosses spanend bearbeitet werden.

Weitere Vorteile der Erfindung ergeben sich aus der nachfolgenden Beschreibung, der Zeichnung sowie den Unteransprüchen.

So wird bei einer besonders bevorzugten Verfahrensvariante des erfindungsgemäßen Verfahrens vorgeschlagen, während des Formens des Vorproduktes an dem mit dem Schloss zu versehenden Abschnitt eine Materialanhäufung auszuformen und das Schloss durch spanende Bearbeitung aus der Materialanhäufung zu fertigen. Durch das Ausformen der Materialanhäufungen wird sichergestellt, dass ausreichend Material in dem Abschnitt vorgesehen ist, aus dem zu einem späteren Zeitpunkt des Schlosses gefertigt werden soll. Ferner ist es möglich, bereits bestimmte Elemente des Schlosses, die einfach durch Umformen herstellbar sind, an der Materialanhäufung auszubilden, so hakenförmige Abschnitte, Daumenleisten und ähnliches. Besonders von Vorteil ist es dabei, wenn die Materialanhäufung beim Fertigen des Vorproduktes so ausgeformt wird, dass die Materialanhäufung im Querschnitt betrachtet bereits an die Form des zu fertigenden Schlosses angepasst ist.

Ferner wird vorgeschlagen, die Herstellung der Spundwandkomponente durch ein erstes Ausformen des Vorproduktes zu beginnen, anschließend bestimmte Ab schnitte des Schlosses durch eine spanende Bearbeitung auszubilden und nach Abschluss der spanenden Bearbeitung in einem weiteren Schritt durch ein erneutes Umformen, beispielsweise durch Kalt- oder Warmwalzen, bestimmte Gestaltungsmerkmale am Schloss auszuformen, um so das Schloss in seine im Querschnitt betrachtet endgültige Schlossform zu bringen. Auf diese Weise ist es beispielsweise möglich, im Schloss ausgebildete Schlosskammern durch spandendes Bearbeiten zu erzeugen und anschließend die dann noch offene Schlosskammer durch anschließendes Ausformen einer Hakenleiste teilweise zu schließen, so dass nur mehr das zum Einhängen nötige Schlossmaul erhalten bleibt.

Um auch das Umformen komplexerer Schlossabschnitte zu ermöglichen und das Material im Bereich des Schlosses nicht zu hoher Verformarbeit auszusetzen, wird ferner vorgeschlagen, den nach der spanenden Bearbeitung zur Ausbildung der endgültigen Schlossform noch umzuformenden Bereich des Abschnittes oder der Materialanhäufung auf eine Warmumformtemperatur zu erwärmen und erst dann auszuformen. Durch entsprechendes Einstellen der Umformtemperatur kann so der Entstehung von mikrokristallinen Rissen vorgebeugt werden.

Die spanende Bearbeitung erfolgt vorzugsweise durch mehrere spanabhebende Werkzeuge, die in einem einzigen Arbeitsschritt zum Einsatz kommen. Es ist jedoch auch denkbar, die spanende Bearbeitung in mehreren aufeinanderfolgenden Arbeitsschritten durchzuführen. Letzteres ist beispielsweise dann von Vorteil, wenn der Materialabtrag bei der spanenden Bearbeitung verhältnismäßig groß ist und in mehreren Schritten durch unterschiedliche Werkzeuge erfolgen muss.

Als Werkzeug wird für die spanende Bearbeitung vorzugsweise ein Werkzeug mit geometrisch bestimmter Schneide, also beispielsweise ein Fräser eingesetzt. Durch Einsatz einer entsprechend verstellbaren Mehrachsen-Fräseinrichtung kann der Fräser an verschiedenen Positionen relativ zur Spundwandkomponente mit dieser zum Spanabheben in Kontakt gebracht werden. Alternativ oder auch ergänzend ist es auch von Vorteil, wenn ein Formfräser zum Einsatz kommt, also ein Fräser, dessen Umfangskontur bereits der zu fräsenden Querschnittsform entspricht. Alternativ, bei geringem Materialabtrag, oder zur Feinbearbeitung kommen auch Werkzeug mit geometrisch unbestimmter Schneide zum Einsatz, so Schleifscheiben, die gegebenenfalls gleichfalls als Formschleifscheiben mit einer vorgegebenen Umfangskontur versehen sind, um das Schloss durch Formschleifen auszubilden.

Gemäß der Erfindung ist das Schloss mit Hilfe einer mobilen Bearbeitungsstation zu erzeugen. Dies ist besonders dann von Vorteil, wenn vor Ort, beispielsweise an einer Baustelle, an einen herkömmlichen Träger, wie einen Doppel-T-Träger nachträglich ein einfaches Schloss, ausgebildet werden soll.

Erfindungsgemäß handelt es sich bei der Spundwandkomponente um einen Keulenträger mit sich zum freien Ende des T-Balkens hin keilförmig erweiternder Querschnittsform.

Nachfolgend wird die Erfindung anhand dreier Verfahrensvarianten unter Bezugnahme auf die Zeichnung näher erläutert. Darin zeigt:
- Fig. 1a und b: in schematischer Darstellung die Herstellung einer keilförmigen Ausnehmung an einem herkömmlichen T-Träger, wobei der T-Träger in Stirnansicht gezeigt ist;
- Fig. 2a und b: in schematischer Darstellung die Herstellung einer Hoeschkaule an einer Spundbohle, wobei die Spundbohle in Stirnansicht gezeigt ist; und
- Fig. 3a bis d: in schematischer Darstellung der Herstellung eines Larssen-Hakens an einer Spundbohle, wobei nach der spanenden Bearbeitung ein zusätzliches Umformen erfolgt.

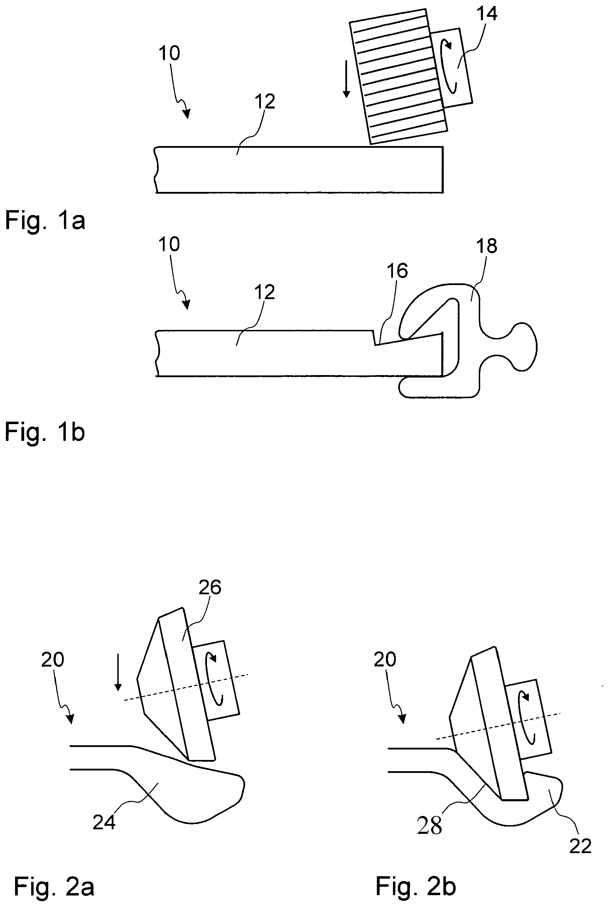

In den Fig. 1a und 1b ist die Herstellung einer keilförmigen Ausnehmung an einem herkömmlichen T-Träger 10 gezeigt. Der T-Träger 10 hat einen T-Balken 12 mit einer vorgegebenen Materialstärke von beispielsweise 14 mm. Mit Hilfe eines um etwa 10° geneigt angeordneten Fräsers 14 wird nun über die gesamte Länge des T-Trägers 10 eine sich in Richtung des T-Abstriches (nicht dargestellt) geneigt verlaufende Tasche 16 ausgefräst. Nach dem Ausfräsen hat der T-Träger 10 die in Fig. 1b gezeigte Querschnittsform und ist nun zum Befestigen eines Verbindungsprofils 18 geeignet, wie es in Fig. 1b gezeigt ist, erfüllt also den Zweck eines sogenannten Keulenträgers.

Das Fräsen kann vor Ort an einer Baustelle erfolgen, sofern dies erforderlich sein sollte.

In den Fig. 2a und 2b ist die nicht unter die Erfindung fallende Herstellung einer Spundwand 20 mit einer sogenannten Höschklaue 22 gezeigt. Die Spundwand 20, deren Stirnseite in den Fig. 2a und 2b gezeigt ist, wird zunächst durch Warmwalzen in bekannter Weise vorgefertigt, wobei an der Längskante des dabei entstehenden Vorproduktes an Stelle eines fertigen Schlosses eine Materialanhäufung 24 ausgebildet wird. Die Materialanhäufung 24 hat im Querschnitt betrachtet bereits die Grundform der Höschklaue 22.

Nach dem Abkühlen der Spundbohle 20 wird die Spundbohle 20 an einer Fräseinrichtung vorbeigeführt, in welcher ein Formfräser 26 eine sich über die gesamte Länge der Spundbohle 20 erstreckende Nut 28 ausfräste. Die Umfangskontur des Formfräsers 26 ist dabei so gewählt, dass die fertige ausgefräste Nut 28 der Ausnehmung der fertigen Hoeschklaue 22 entspricht.

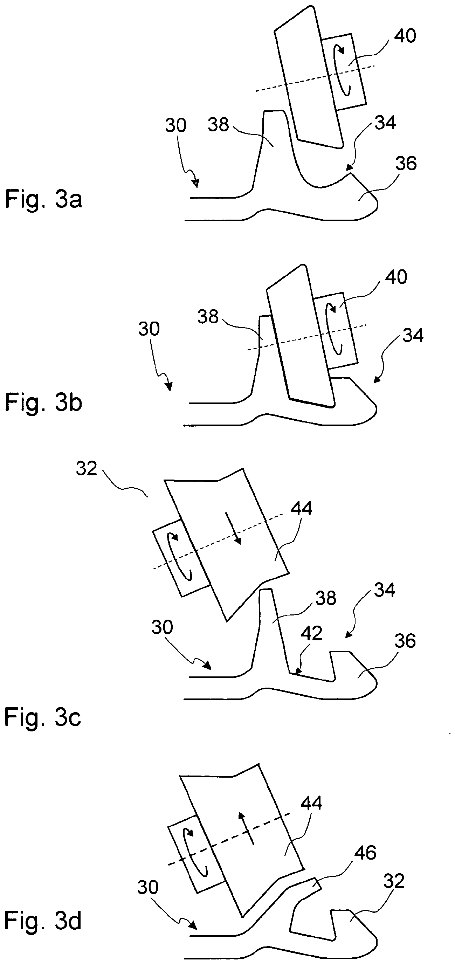

In den Fig. 3a bis 3d ist die nicht unter die Erfindung fallende Herstellung einer Spundbohle 30 mit einem Larssen-Schloss 32 gezeigt. Auch hier wird zunächst ein Vorprodukt durch Warmwalzen gefertigt, bei dem an Stelle des fertigen Schlosses an der Längskante eine Materialanhäufung 34 ausgeformt wird. Die Materialanhäufung 34 weist einen das freie Ende der Längskante bildenden ersten Abschnitt 36 sowie einen von diesem etwa rechtwinklig in Fig. 3a nach oben zeigend dargestellten zweiten Abschnitt 38 auf.

Anschließend wird mit Hilfe eines Formfräsers 40 eine sich über die gesamte Länge der Spundbohle 30 erstreckende, an der in Fig. 3a oben gezeigten Fläche des ersten Abschnittes 36 angeordnete Nut 42 ausgefräst. Dabei wird gleichzeitig in geringem Umfang auch Material von der nach außen zeigenden Seitenfläche des zweiten Abschnittes 38 abgetragen. Auch hier ist die Umfangskontur des Formfräsers 40 so gewählt, dass die fertig ausgefräste Nut 42 in etwa der Querschnittsform der späteren Schlosskammer des Larssen-Schlosses 32 entspricht.

Nach dem Ausfräsen der Nut 42 wird der nach oben zeigende zweite Abschnitt 38 mit Hilfe einer nicht dargestellten Heizeinrichtung, beispielsweise einer Induktionsheizeinrichtung, auf eine Umformtemperatur erwärmt, wie sie beim Warmwalzen üblich ist. Anschließend wird der zweite Abschnitt 38 mit Hilfe einer Umformwalze 44 unter Ausbildung einer Hakenleiste 46 des Larssen-Schlosses 32 in Richtung des ersten Abschnittes 36 teilweise umgelegt. Die Umfangskontur der Umformwalze 44 ist hierbei gleichfalls so ausgebildet, dass der umgelegte zweite Abschnitt 38 eine vorgegebene, der Hakenleiste 46 eines herkömmlich gefertigten Larssen-Schlosses 32 entsprechende Form aufweist.

Mit dem erfindungsgemäßen Verfahren ist auf einfache und elegante Weise die Herstellung unterschiedlichster Schlossformen möglich, wobei derartige Schlösser beispielsweise auch an herkömmlichen Doppel-T-Trägern ausgebildet werden, sofern ausreichend Material an den T-Balken der Doppel-T-Träger vorgesehen ist.

### Bezugszeichenliste:

- 10: T-Träger
- 12: T-Balken
- 14: Fräser
- 16: Tasche
- 18: Verbindungsprofil

- 20: Spundbohle
- 22: Hoeschklaue
- 24: Materialanhäufung
- 26: Formfräser
- 28: Nut

- 30: Spundbohle
- 32: Larssen-Schloss
- 34: Materialanhäufung
- 36: erster Abschnitt
- 38: zweiter Abschnitt
- 40: Formfräser
- 42: Nut
- 44: Umformwalze
- 46: Hakenleiste

## Patentansprüche

1. Verfahren zur Herstellung einer Spundwandkomponente, die mindestens ein sich über die gesamte Länge der Spundwandkomponente erstreckendes Schloss gleichbleibenden Querschnitts zum Einhängen des Schlosses einer weiteren (18) Spundwandkomponente aufweist, wobei bei dem Verfahren:
ein Vorprodukt durch Umformen gefertigt wird und
das Schloss im Querschnitt gesehen zumindest abschnittsweise durch spanende Bearbeitung an dem mit dem Schloss zu versehenden Abschnitt des Vorproduktes gefertigt wird, wobei der Abschnitt im Querschnitt so ausreichend bemessen ist,
dass durch das Umformen am Vorprodukt entstehende Maßabweichungen bei der spanenden Bearbeitung des Schlosses berücksichtigt sind,
**dadurch gekennzeichnet,**
**dass** die Spundwandkomponente ein Keulenträger (10) mit sich zum freien Ende des T-Balkens (12) hin keilförmig erweiternder Querschnittsform als Schloss zum Einhängen des Schlosses einer weiteren (18) Spundwandkomponente ist, und dass das Schloss im Querschnitt gesehen zumindest abschnittsweise mit Hilfe einer mobilen Bearbeitungsstation durch spanende Bearbeitung aus dem Vorprodukt erzeugt wird.

2. Verfahren nach Anspruch 1, bei dem während des Formens des Vorproduktes an dem mit dem Schloss zu versehenden Abschnitt eine Materialanhäufung (24) ausgeformt und das Schloss durch spanende Bearbeitung aus der Materialanhäufung gefertigt wird, wobei die Materialanhäufung im Querschnitt so bemessen ist, dass durch das Umformen am Vorprodukt entstehende Maßabweichungen bei der spanenden Bearbeitung des Schlosses berücksichtigt sind.

3. Verfahren nach Anspruch 2, bei dem die Materialanhäufung (24) beim Formen des Vorproduktes so ausgeformt wird, dass die Materialanhäufung (24) im Querschnitt betrachtet an die Form des zu fertigenden Schlosses bereits angepasst ist.

4. Verfahren nach Anspruch 1, 2 oder 3, bei dem der mit dem Schloss zu versehende Abschnitt des Vorproduktes oder die am Vorprodukt ausgebildete Materialanhäufung (24) nach der spanenden Bearbeitung im Querschnitt betrachtet zumindest abschnittsweise zur endgültigen Schlossform umgeformt wird.

5. Verfahren nach Anspruch 4, bei dem zumindest der nach der spanenden Bearbeitung zur Ausbildung der endgültigen Schlossform noch umzuformende Bereich des Abschnittes oder der Materialanhäufung (24) auf eine Warmumformtemperatur erwärmt wird.

6. Verfahren nach einem der vorhergehenden Ansprüche, bei dem die spanende Bearbeitung des Schlosses durch mehrere spanabhebende Werkzeuge, vorzugsweise in mehreren aufeinanderfolgenden Arbeitsschritten, erfolgt.

7. Verfahren nach einem der vorhergehenden Ansprüche, bei dem die spanende Bearbeitung durch mindestens ein Werkzeug mit geometrisch bestimmter Schneide und/oder durch mindestens ein Werkzeug mit geometrisch unbestimmter Schneide durchgeführt wird.

8. Verfahren nach einem der vorhergehenden Ansprüche, bei dem die spanende Bearbeitung durch Formfräsen (26) und/oder Formschleifen erfolgt.

## Claims

1. Method for manufacturing a bulkhead component, which comprises at least one lock extending across the entire length of the bulkhead component with a consistent cross-section for hanging the lock of another (18) bulkhead component, wherein, in the case of the method:
an intermediate product is manufactured by means of forming and
the lock viewed in the cross-section is manufactured at least in sections by means of machining on the section of the intermediate product to be provided with the lock, wherein the section is measured in the cross-section sufficiently enough that the measurement deviations arising due to the forming performed on the intermediate product are taken into account when machining the lock,
**characterized in that**
the bulkhead component is a lobe support (10) with a cross-sectional form expanding in a V-shaped manner towards the free end of the T-beam (12) as a lock for hanging the lock of another (18) bulkhead component, and,
in a cross-sectional view, the lock is manufactured at least in sections from an intermediate product by means of machining with the aid of a mobile machining station.

2. Method according to Claim 1, in which, during the forming of the intermediate product, a material accumulation (24) is formed on the section to be provided with the lock and the lock is manufactured from the material accumulation by means of machining, wherein the material accumulation is measured in the cross-section in such a way that measurement deviations during the machining of the lock deriving from the forming performed on the intermediate product are taken into account.

3. Method according to Claim 2, in which, during the forming of the intermediate product, the material accumulation (24) is formed in such a way that the material accumulation (24) in a cross-sectional view is already adapted to the form of the lock to be manufactured.

4. Method according to Claim 1, 2 or 3, in which, in a cross-sectional view, the section of the intermediate product to be provided with the lock or the material accumulation formed on the intermediate product (24) is formed into the final lock shape at least in sections after machining.

5. Method according to Claim 4, in which at least the region of the section or of the material accumulation (24) to still be formed after machining in order form the final lock shape is heated to a hot-forming temperature.

6. Method according to any one of the preceding claims, in which the machining of the lock takes place by means of a plurality of machining tools, preferably, in a plurality of consecutive work steps.

7. Method according to any one of the preceding claims, in which the machining is carried out by means of at least one tool with a geometrically defined cutting edge and/or by means of at least one tool with a geometrically undefined cutting edge.

8. Method according to any one of the preceding claims, in which the machining takes place by means of form milling (26) and/or form grinding.

## Revendications

1. Procédé de fabrication d'un composant de palplanche, qui comporte au moins une serrure de section permanente s'étendant sur toute la longueur du composant de palplanche pour accrocher la serrure d'un autre composant de palplanche (18), sachant que pour le procédé :
un produit semi-fini est fabriqué par déformation, et
la serrure, considérée dans la section transversale, est fabriquée au moins par tronçon par usinage par enlèvement de copeaux sur la section du produit semi-fini à doter de la serrure, sachant que la section est suffisamment dimensionnée dans la section transversale de telle sorte que les écarts de mesure se produisant par la déformation sur le produit semi-fini sont pris en considération lors de l'usinage par enlèvement de copeaux de la serrure,
**caractérisé en ce que**
le composant de palplanche est un support à lobe (10) avec une forme de section s'écartant en forme de coin vers l'extrémité libre de la poutre en T (12) en tant que serrure pour accrocher la serrure d'un autre composant de palplanche (18) et **en ce que** la serrure,
vue dans la section, est produite au moins par tronçon à l'aide d'un poste d'usinage mobile par usinage par enlèvement de copeaux à partir du produit semi-fini.

2. Procédé selon la revendication 1, pour lequel pendant le formage du produit semi-fini, une accumulation de matière (24) est conformée sur la section à doter de la serrure et la serrure est fabriquée par usinage par enlèvement de copeaux à partir de l'accumulation de matière, sachant que l'accumulation de matière est dimensionnée dans la section de telle sorte que les écarts de mesure se produisant par la déformation sur le produit semi-fini sont pris en considération lors de l'usinage par enlèvement de copeaux de la serrure.

3. Procédé selon la revendication 2, pour lequel l'accumulation de matière (24) est conformée lors du formage du produit semi-fini de telle manière que l'accumulation de matière (24) est déjà adaptée, considérée dans la section transversale, à la forme de la serrure à fabriquer.

4. Procédé selon la revendication 1, 2 ou 3, pour lequel la section du produit semi-fini à doter de la serrure ou l'accumulation de matière (24) constituée sur le produit semi-fini est déformée au moins par tronçon en forme de serrure définitive, après usinage par enlèvement de copeaux.

5. Procédé selon la revendication 4, pour lequel au moins la zone de la section ou de l'accumulation de matière (24) restant encore à déformer après l'usinage par enlèvement de copeaux pour constituer la forme de serrure définitive est réchauffée à une température de déformation à chaud.

6. Procédé selon l'une quelconque des revendications précédentes, pour lequel l'usinage par enlèvement de copeaux de la serrure a lieu par plusieurs outils enlevant des copeaux, de préférence dans plusieurs étapes de travail successives.

7. Procédé selon l'une quelconque des revendications précédentes, pour lequel l'usinage par enlèvement de copeaux est exécuté au moins par un outil avec un tranchant géométriquement déterminé et/ou par au moins un outil avec un tranchant géométriquement non déterminé.

8. Procédé selon l'une quelconque des revendications précédentes, pour lequel l'usinage par enlèvement de copeaux a lieu par fraisage de forme (26) et/ou rectification de forme.
